# EUROPÄISCHE PATENTSCHRIFT

(11) **EP 3 980 639 B1**
(45) Veröffentlichungstag und Bekanntmachung des Hinweises auf die Patenterteilung: **12.07.2023**
(21) Anmeldenummer: 20730999.8
(22) Anmeldetag: 27.05.2020
(51) Int. Cl.: F02M 21/02, F02M 47/02

(54) **KRAFTSTOFFINJEKTOR, VERFAHREN ZUM BETREIBEN EINES KRAFTSTOFFINJEKTORS**
FUEL INJECTOR, AND METHOD FOR OPERATING A FUEL INJECTOR
INJECTEUR DE CARBURANT ET PROCÉDÉ POUR FAIRE FONCTIONNER UN INJECTEUR DE CARBURANT

(30) Priorität: 07.06.2019 DE 102019208332
(43) Veröffentlichungstag der Anmeldung: 13.04.2022
(73) Patentinhaber: Robert Bosch GmbH, 70442 Stuttgart (DE)
(72) Erfinder: LEIBSSLE, Benedikt, 70191 Stuttgart (DE); WESSNER, Jochen, 73728 Esslingen (DE); KATZ, Martin, 70469 Stuttgart (DE)
(86) Internationale Anmeldenummer: PCT/EP2020/064760
(87) Internationale Veröffentlichungsnummer: WO 2020/245011

(56) Entgegenhaltungen:
- DE-A1-102011 078 390
- DE-A1-102016 015 038
- DE-A1-102016 211 680
- DE-A1-102018 208 361
- DE-A1-102018 217 723

## Beschreibung

Die Erfindung betrifft einen Kraftstoffinjektor zum Einblasen gasförmiger Kraftstoffe, wie beispielsweise Erdgas (NG, d. h. "Natural Gas") in einen Brennraum einer Brennkraftmaschine gemäß dem Oberbegriff des Anspruchs 1.

Der Kraftstoffinjektor kann als Mono-Fuel-Injektor oder als Dual-Fuel-Injektor ausgebildet sein. Ist letzteres der Fall, kann der Kraftstoffinjektor zum Einblasen bzw. Einspritzen zweier unterschiedlicher Kraftstoffe genutzt werden, beispielsweise eines gasförmigen und eines flüssigen Kraftstoffs. Mit Hilfe des flüssigen Kraftstoffs kann zum Beispiel der gasförmige Kraftstoff gezündet werden. Dies gilt insbesondere, wenn Dieselkraftstoff als flüssiger Kraftstoff verwendet wird.

Darüber hinaus betrifft die Erfindung ein Verfahren zum Betreiben eines solchen Kraftstoffinjektors.

### Stand der Technik

Bei der Verbrennung gasförmiger Kraftstoffe werden zunehmend höhere Einblasdrücke verwirklicht, um bei Volllast Anforderungen zu erfüllen, wie sie an die Verbrennung von Dieselkraftstoff gestellt werden. Hohe Einblasdrücke führen jedoch zu Einblasraten, die bei Teillastbetrieb der Brennkraftmaschine zu groß sind und bei der Umsetzung häufig mit einer unerwünschten Geräuschentwicklung und/oder erhöhten Emissionen einhergehen. Dies gilt es zu vermeiden.

Aus der DE 10 2016 015 038 A1 ist ein Kraftstoffinjektor zum Einblasen gasförmiger Kraftstoffe bekannt mit einer hydraulischen Anschlagdämpfung der Düsennadel.

Als Lösungsansatz kann ein Druckregelventil zur Gasdruckregelung an einem Speicherbehälter für den gasförmigen Kraftstoff vorgesehen werden, über den mindestens ein Kraftstoffinjektor mit gasförmigem Kraftstoff versorgbar ist. Die Gasdruckregelung über einen solchen Druckregler erfolgt jedoch aufgrund der hohen Kompressibilität des gasförmigen Kraftstoffs sehr langsam. Ferner fallen große Steuermengen an, die verloren gehen, da sie wegen des niedrigen Druckniveaus weder in den Gastank zurückgeführt, noch der Verbrennung zugeführt werden können. Ein Abblasen der anfallenden Steuermengen in die Umgebung ist aufgrund des hohen Erwärmungspotenzials ("global warming") ebenfalls nicht möglich.

Der vorliegenden Erfindung liegt daher die Aufgabe zugrunde, einen Kraftstoffinjektor zum Einblasen gasförmiger Kraftstoffe anzugeben, der eine dynamische, insbesondere betriebspunktabhängige Formung der Einblasrate bei gleichbleibend hohem Gasdruck ermöglicht.

Zur Lösung der Aufgabe wird der Kraftstoffinjektor mit den Merkmalen des Anspruchs 1 vorgeschlagen. Ferner wird ein Verfahren gemäß Anspruch 10 zum Betreiben eines Kraftstoffinjektors angegeben. Vorteilhafte Weiterbildungen der Erfindung sind den jeweiligen Unteransprüchen zu entnehmen.

### Offenbarung der Erfindung

Der vorgeschlagene Kraftstoffinjektor dient dem Einblasen gasförmiger Kraftstoffe in einen Brennraum einer Brennkraftmaschine. Er umfasst mindestens eine hubbewegliche Düsennadel zum Freigeben und Verschließen mindestens einer Einblasöffnung, wobei die Düsennadel einen Steuerraum begrenzt, der über eine Zulaufdrossel, die innerhalb eines Zulaufkanals ausgebildet ist, mit einem hydraulischen Druckmittel, vorzugsweise mit flüssigem Kraftstoff, beaufschlagbar ist. Erfindungsgemäß ist im Zulaufkanal unter Ausbildung eines als Zulaufdrossel dienenden Ringspalts ein Bolzen aufgenommen, dessen Lage in Bezug auf eine Längsachse des Zulaufkanals veränderbar ist, so dass der Drosselquerschnitt der Zulaufdrossel ring- oder sichelförmig ist.

Durch Lageveränderung des Bolzens kann somit der Drosselquerschnitt der Zulaufdrossel gezielt verändert werden. Entsprechend verändert sich der Durchfluss durch die Zulaufdrossel und damit der Zulauf von hydraulischem Druckmittel in den Steuerraum. Wird der Zulauf von hydraulischem Druckmittel während eines Einspritzvorgangs erhöht, sinkt der Steuerdruck im Steuerraum langsamer, was zur Folge hat, dass die Düsennadel abgebremst wird und die Geschwindigkeit der Düsennadel beim Öffnen abnimmt.

Die Einstellbarkeit des Durchflusses der Zulaufdrossel ermöglicht eine betriebspunktabhängige, insbesondere lastabhängige Formung der Einblasrate. Die Einstellung kann zudem dynamisch, insbesondere unabhängig vom Gasdruck sowie unabhängig vom Druckmittelversorgungsdruck vorgenommen werden. Das heißt, dass sowohl der Gasdruck als auch der Druckmittelversorgungsdruck konstant bleiben können. Eine Gasdruckregelung bzw. ein Gasdruckregler an einem Speicherbehälter für den gasförmigen Kraftstoff kann somit entfallen. Ferner kann das Gasversorgungsdruckniveau so hoch eingestellt werden, dass bei Volllast eine maximale Nadeldynamik für eine steil ansteigende Einblasrate erreicht wird, die anschließend auf einem hohen Niveau bleibt oder zur Verbrauchsoptimierung abflacht.

Gemäß einer bevorzugten Ausführungsform der Erfindung ist ein Ende des Bolzens exzentrisch in einem drehbeweglich gelagerten Zylinder aufgenommen, so dass über eine Drehung des Zylinders die Lage des Bolzens in Bezug auf die Längsachse des Zulaufkanals veränderbar ist. Beispielsweise kann der Bolzen über eine Drehung des Zylinders aus einer zentrischen Lage in eine exzentrische Lage in Bezug auf die Längsachse des Zulaufkanals bewegt werden. In der zentrischen Lage des Bolzens ist der Drosselquerschnitt der Zulaufdrossel ringförmig, in der exzentrischen Lage nähert sich der Bolzen einseitig der Wandung des Zulaufkanals, so dass der Drosselquerschnitt eine sichelförmige Gestalt annimmt. Liegt der Bolzen einseitig an der Wandung des Zulaufkanals an, ist der Ringspalt zwischen dem Bolzen und der Wandung an einer Stelle minimal und an anderer Stelle maximal. Entsprechend verhält es sich mit dem Durchfluss durch die Zulaufdrossel. Wird der Bolzen aus einer exzentrischen Lage in Richtung einer zentrischen Lage bewegt, verkleinert sich der Ringspalt und der Durchfluss verringert sich. Das heißt, dass in der zentrischen Lage des Bolzens in Bezug auf die Längsachse des Zulaufkanals der Durchfluss durch die Zulaufdrossel minimal ist.

Die Lageveränderung des Bolzens über eine Drehbewegung eines den Bolzen endseitig aufnehmenden Zylinders besitzt den Vorteil, dass sie vergleichsweise einfach zu realisieren ist. Denn der Bolzen muss lediglich exzentrisch in Bezug auf den Zylinder angeordnet werden, der selbst zentrisch bzw. koaxial in Bezug auf den Zulaufkanal angeordnet werden kann. Das heißt, dass der Bolzen und der Zylinder nicht koaxial zueinander angeordnet sind. Über eine Drehbewegung des Zylinders kann somit eine Drehbewegung des Bolzens bewirkt werden, die zugleich zu einer radialen Verschiebung des Bolzens führt. Die Drehbewegung des Zylinders wird vorzugsweise mechanisch bewirkt.

Alternativ zu einer Drehbewegung kann die gewünschte Lageveränderung des Bolzens auch ausschließlich durch eine Verschiebung des Bolzens in radialer Richtung in Bezug auf den Zulaufkanal bewirkt werden. In diesem Fall muss der Bolzen in Bezug auf den Zulaufkanal radial verschiebbar gelagert oder in einem in Bezug auf den Zulaufkanal radial verschiebbaren Körper gehalten sein. Die radiale Verschiebung des Bolzens und/oder Körpers wird vorzugsweise ebenfalls mechanisch bewirkt.

Zur Rückstellung des Bolzens in eine Ausgangslage, beispielsweise in eine zentrische Lage in Bezug auf die Längsachse des Zulaufkanals, ist vorzugweise mindestens ein Federelement vorgesehen. Die Bewegung aus der Ausgangslage in eine andere Lage wird somit gegen die Federkraft der Feder bewirkt. Dabei wird die Feder weiter gespannt, so dass hierüber die Rückstellung des Bolzens realisierbar ist.

Sofern zur Lageveränderung des Bolzens ein drehbeweglich gelagerter Zylinder vorgesehen ist, wird vorgeschlagen, dass die Federkräfte des mindestens einen Federelements den drehbeweglich gelagerten Zylinder mit einem Drehmoment beaufschlagen. Der Bolzen wird in diesem Fall indirekt über eine Rückstellung des Zylinders in seine Ausgangsstellung zurückgestellt.

Wie bereits erwähnt, ist der Zylinder vorteilhafterweise koaxial zur Längsachse des Zulaufkanals angeordnet. Der Zylinder kann demnach im Zulaufkanal angeordnet werden, was den erforderlichen Platzbedarf so gering wie möglich hält.

Bevorzugt ist der Zulaufkanal gestuft ausgeführt und bildet einen als Axiallager für den Zylinder dienenden ringförmigen Absatz aus. Die drehbewegliche Lagerung des Zylinders kann auf diese Weise besonders einfach realisiert werden.

Gemäß einer ersten bevorzugten Ausführungsform der Erfindung erfolgt der Zulauf von hydraulischem Druckmittel in die Zulaufdrossel über einen senkrecht zum Zulaufkanal geführten Verbindungskanal, so dass die Zulaufdrossel radial anströmbar ist. Das hydraulische Druckmittel kann somit direkt in den Ringspalt bzw. in die Zulaufdrossel eingeleitet werden.

Alternativ wird vorgeschlagen, dass der Zulauf von hydraulischem Druckmittel in die Zulaufdrossel über einen parallel zum Zulaufkanal geführten Verbindungskanal erfolgt, so dass die Zulaufdrossel axial anströmbar ist. Ist im Zulaufkanal zugleich ein drehbeweglicher Zylinder zur Lageveränderung des Bolzens aufgenommen, muss der Verbindungskanal durch den Zylinder oder am Zylinder vorbeigeführt werden, so dass das hydraulische Druckmittel indirekt in den Ringspalt bzw. in die Zulaufdrossel eingeleitet wird.

Zur Lösung der eingangs genannten Aufgabe wird ferner ein Verfahren gemäß Anspruch 10 vorgeschlagen.

Das vorgeschlagene Verfahren kann insbesondere unter Verwendung eines erfindungsgemäßen Kraftstoffinjektors durchgeführt werden, da dieser eine zur Durchführung des Verfahrens geeignete Zulaufdrossel aufweist. Mit Hilfe des Verfahrens können demzufolge dieselben Vorteile wie mit Hilfe des zuvor beschriebenen Kraftstoffinjektors erzielt werden. Das heißt, dass eine dynamische, vorzugsweise betriebspunktabhängige, insbesondere lastabhängige Formung der Einblasrate des Kraftstoffinjektors bei konstantem, vorzugsweise maximalem Gasdruck realisierbar ist.

Gemäß einer vorteilhaften Ausgestaltung des erfindungsgemäßen Verfahrens wird der zur Variation des Durchflusses durch die Zulaufdrossel im Zulaufkanal aufgenommene Bolzen mechanisch entgegen der Federkraft mindestens eines Federelements bewegt und die Federkraft wird zur Rückstellung des Bolzens genutzt. Die Lageveränderung de Bozens wird in diesem Fall mit einfachen Mitteln realisiert, so dass der Zusatzaufwand zur Durchführung des Verfahrens vergleichsweise gering ist.

Bevorzugte Ausführungsformen der Erfindung werden nachfolgend anhand der beigefügten Zeichnungen näher erläutert. Diese zeigen:
Fig. 1 einen schematischen Längsschnitt durch einen erfindungsgemäßen Kraftstoffinjektor gemäß einer ersten bevorzugten Ausführungsform der Erfindung im Bereich der Zulaufdrossel, bei maximalem Durchfluss,
Fig. 2 einen schematischen Längsschnitt durch den Kraftstoffinjektor der Fig. 1, bei minimalem Durchfluss,
Fig. 3 einen schematischen Längsschnitt durch einen erfindungsgemäßen Kraftstoffinjektor gemäß einer zweiten bevorzugten Ausführungsform der Erfindung im Bereich der Zulaufdrossel, bei maximalem Durchfluss,
Fig. 4 einen schematischen Längsschnitt durch den Kraftstoffinjektor der Fig. 3, bei minimalem Durchfluss,
Fig. 5 einen schematischen Querschnitt durch einen erfindungsgemäßen Kraftstoffinjektor gemäß einer dritten bevorzugten Ausführungsform der Erfindung im Bereich der Zulaufdrossel, bei minimalem Durchfluss,
Fig. 6 einen schematischen Querschnitt durch den Kraftstoffinjektor der Fig. 5, bei maximalem Durchfluss, und
Fig. 7 eine graphische Darstellung des Nadelhubverlaufs (x) und des Drosselquerschnitts (A_{z}) der Zulaufdrossel über die Zeit (t).

### Ausführliche Beschreibung der Zeichnungen

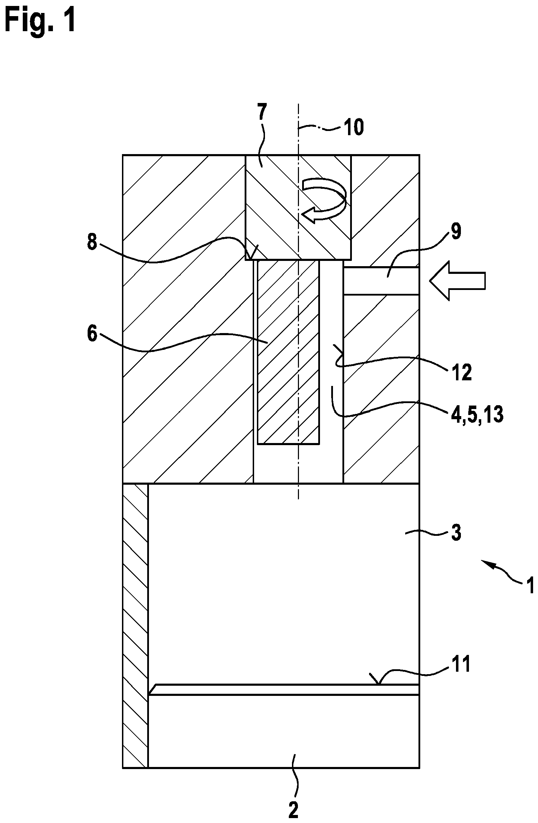

Ein erster erfindungsgemäßer Kraftstoffinjektor 1 zum Einblasen eines gasförmigen Kraftstoffs in einen Brennraum einer Brennkraftmaschine ist ausschnittsweise der Fig. 1 zu entnehmen. Der Ausschnitt zeigt den Bereich einer Zulaufdrossel 4, über die ein Steuerraum 3 mit einem hydraulischen Druckmittel beaufschlagbar ist. Der Steuerraum 3 wird von einer hubbeweglichen Düsennadel 2 begrenzt, an deren Stirnfläche 11 somit der im Steuerraum 3 herrschende Steuerdruck anliegt. Über den Steuerdruck im Steuerraum 3 sind die Hubbewegungen der Düsennadel 2 steuerbar. Damit die Düsennadel 2 öffnet, muss der Steuerdruck gesenkt werden. Der Steuerraum 3 ist hierzu in Abhängigkeit von der Schaltstellung eines Steuerventils (nicht dargestellt) über eine Ablaufdrossel (nicht dargestellt) entlastbar. Wird das Steuerventil geöffnet, strömt hydraulisches Druckmittel aus dem Steuerraum 3 ab. In der Folge sinkt der Druck im Steuerraum 3, so dass eine auf die Düsennadel 2 wirkende Kraftresultierende die Düsennadel 2 aus einem Dichtsitz (nicht dargestellt) hebt. Zum Schließen der Düsennadel 2 wird das Steuerventil geschlossen, so dass kein hydraulisches Druckmittel mehr aus dem Steuerraum 3 abströmen kann. In der Folge steigt der Druck im Steuerraum 3, so dass die hydraulischen Kräfte eine in Schließrichtung wirkende Kraft auf die Düsennadel 2 ausüben.

Um die Steuerung der Einblasrate des Kraftstoffinjektors 1 betriebspunktabhängig, insbesondere lastabhängig, vornehmen zu können, weist die Zulaufdrossel 4 eines erfindungsgemäßen Kraftstoffinjektors 1 einen variablen Drosselquerschnitt A_{z} auf. Auf diese Weise kann der Durchfluss durch die Zulaufdrossel 4 bzw. der Zulauf von hydraulischem Druckmittel in den Steuerraum 3 betriebspunktabhängig, insbesondere lastabhängig, gesteuert werden. Denn über den Zulauf von hydraulischem Druckmittel in den Steuerraum 3 kann Einfluss auf das Öffnungs- und/oder Schließverhalten der Düsennadel 2 genommen werden.

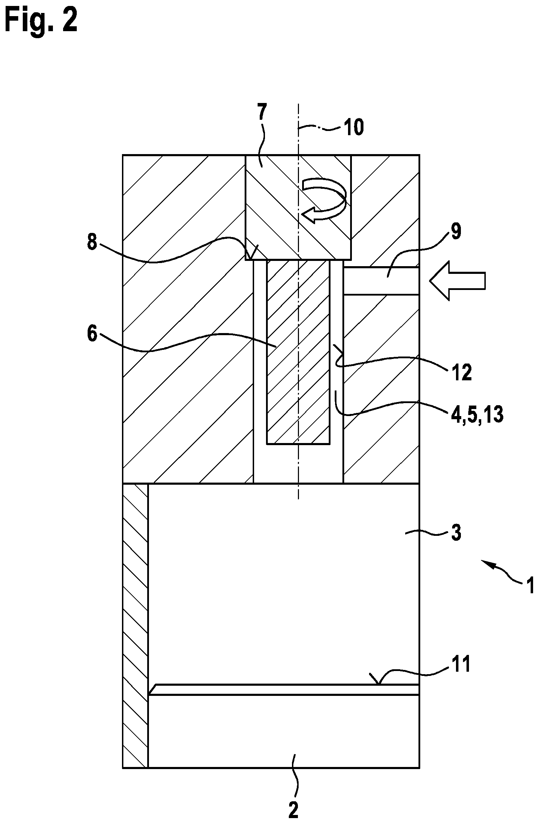

Der Kraftstoffinjektor 1 der Fig. 1 weist hierzu einen in den Steuerraum 3 mündenden Zulaufkanal 5 auf, in dem ein Bolzen 6 aufgenommen ist. Der Bolzen 6 ist exzentrisch in Bezug auf eine Längsachse 10 des Zulaufkanals 5 angeordnet. An seinem dem Steuerraum 3 abgewandten Ende ist der Bolzen 6 in einem Zylinder 7 aufgenommen, der koaxial zum Zulaufkanal 5 angeordnet und über einen ringförmigen Absatz 8 drehbeweglich gelagert ist. Zur Ausbildung des ringförmigen Absatzes 8 ist der Zulaufkanal 5 gestuft ausgeführt. Führt der Zylinder 7 eine Drehbewegung aus, dreht sich auch der Bolzen 6. Da der Bolzen 6 ist in Bezug auf den Zylinder 7 exzentrisch angeordnet ist, bewegt er sich zugleich in Bezug auf den Zulaufkanal 5 in radialer Richtung. Der Bolzen 6 kann somit aus der dargestellten exzentrischen Lage in eine zentrische Lage bewegt werden (siehe Fig. 2). Dies führt zu einer Verkleinerung eines zwischen dem Bolzen 6 und einer Wandung 12 des Zulaufkanals 5 verbleibenden Ringspalts 13 und damit zu einer Verringerung des Durchflusses durch die Zulaufdrossel 4. Dies wiederum hat zur Folge, dass sich der Steuerraum 3 weniger schnell mit dem hydraulischen Druckmittel füllt.

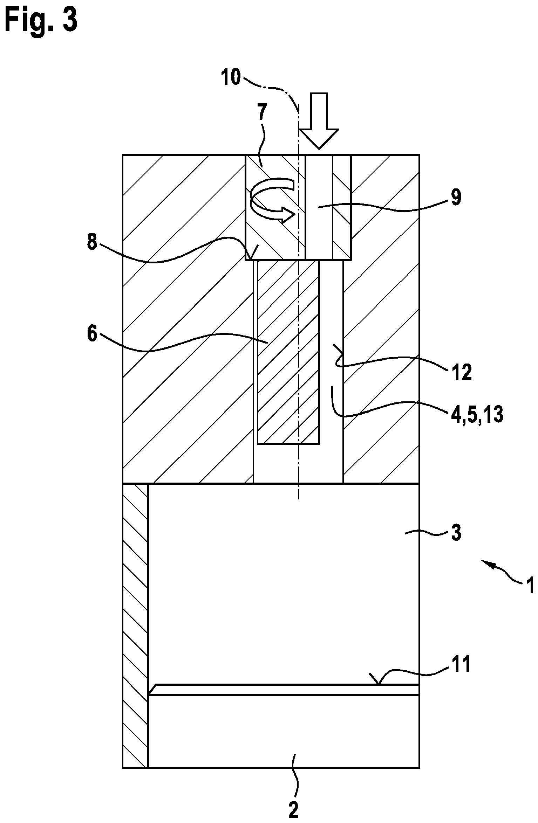

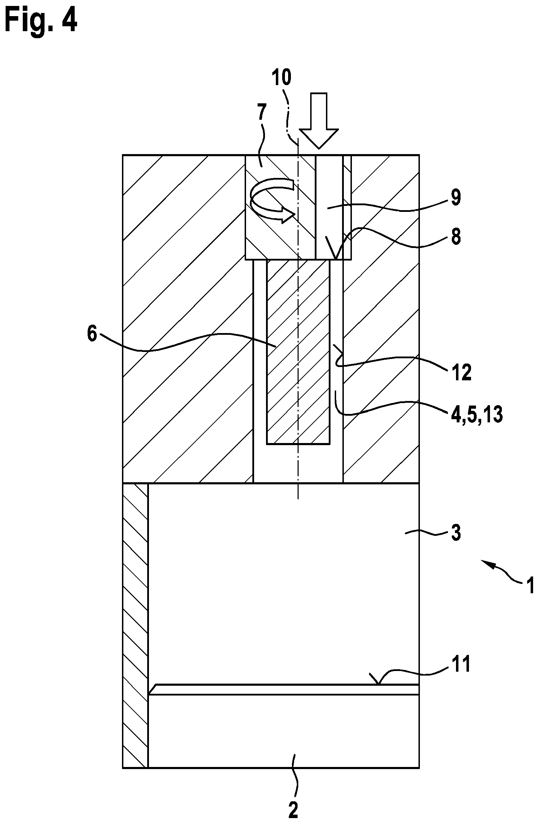

Den Figuren 3 und 4 ist eine weitere bevorzugte Ausführungsform eines erfindungsgemäßen Kraftstoffinjektors 1 zu entnehmen, die sich von dem der Figuren 1 und 2 lediglich dadurch unterscheidet, dass der Zulaufkanal 5 bzw. die hierin ausgebildete Zulaufdrossel 4 über einen Verbindungskanal 9 axial statt radial angeströmt werden. Der Verbindungskanal 9 ist hierzu axial angeordnet und durch den Zylinder 7 hindurchgeführt.

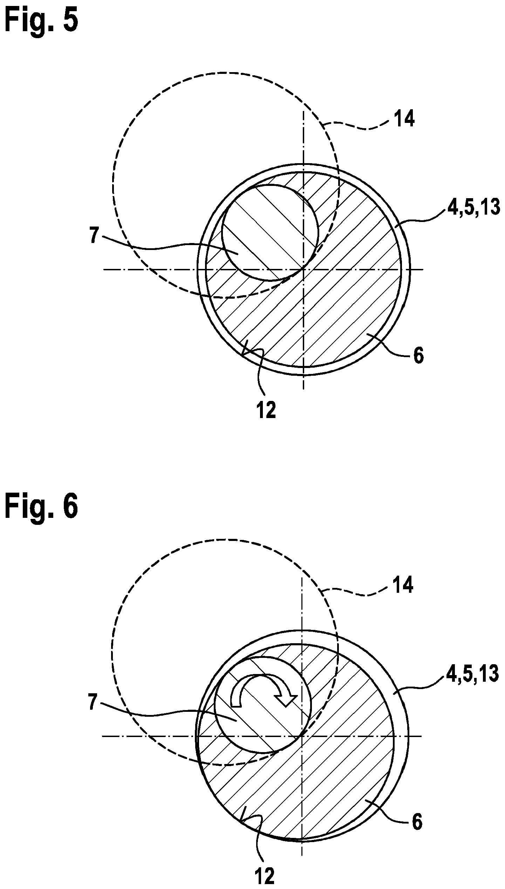

Den Figuren 5 und 6 ist eine dritte bevorzugte Ausführungsform eines erfindungsgemäßen Kraftstoffinjektors 1 zu entnehmen. Dargestellt ist jeweils ein Querschnitt durch den Kraftstoffinjektor 1, und zwar im Bereich des im Zulaufkanal 5 aufgenommenen Bolzens 6. In der Fig. 5 ist der Bolzen 6 in einer zentrischen Lage in Bezug auf den Zulaufkanal 5 dargestellt, in der Fig. 6 in einer exzentrischen Lage. Die Lageveränderung wird mittels eines drehbeweglich gelagerten Zylinders 7 bewirkt, der sich vorliegend bei einer Drehung entlang einer Kreisbahn 14 bewegt. Da der Zylinder 7 und der Bolzen 6 nicht koaxial zueinander angeordnet sind, führt die Drehbewegung des Zylinders 7 zu einer Schwenkbewegung des Bolzens 6, so dass sich dieser einseitig der Wandung 12 des Zulaufkanals 5 nähert. Auf der diametral gegenüberliegenden Seite weitet sich der Ringspalt 13 zwischen dem Bolzen 6 und der Wandung 12, so dass sich der Durchfluss durch die Zulaufdrossel 4 erhöht.

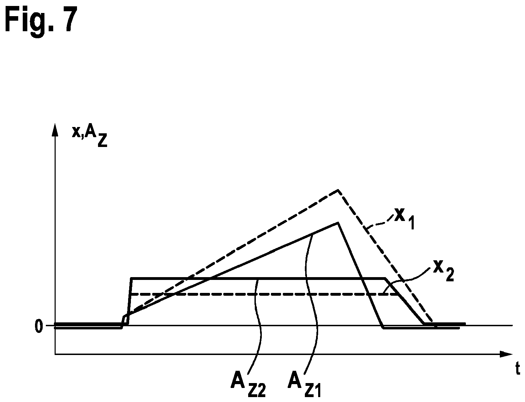

Ein typischer Nadelhubverlauf x (Kurve x₁ bei Volllast und Kurve x₂ bei Teillast) sowie der zugehörige Drosselquerschnitt A_{z} (Kurve A_{z1} bei Volllast und Kurve A_{z2} bei Teillast) über die Zeit t ist in der Fig. 7 dargestellt.

## Patentansprüche

1. Kraftstoffinjektor (1) zum Einblasen gasförmiger Kraftstoffe in einen Brennraum einer Brennkraftmaschine, umfassend mindestens eine hubbewegliche Düsennadel (2) zum Freigeben und Verschließen mindestens einer Einblasöffnung, wobei die Düsennadel (2) einen Steuerraum (3) begrenzt, der über eine Zulaufdrossel (4), die innerhalb eines Zulaufkanals (5) ausgebildet ist, mit einem hydraulischen Druckmittel, vorzugsweise mit flüssigem Kraftstoff, beaufschlagbar ist,
**dadurch gekennzeichnet, dass** im Zulaufkanal (5) unter Ausbildung eines als Zulaufdrossel (4) dienenden Ringspalts ein Bolzen (6) aufgenommen ist, dessen Lage in Bezug auf eine Längsachse (10) des Zulaufkanals (5) veränderbar ist, so dass der Drosselquerschnitt der Zulaufdrossel (4) ring- oder sichelförmig ist.

2. Kraftstoffinjektor (1) nach Anspruch 1,
**dadurch gekennzeichnet, dass** ein Ende des Bolzens (6) exzentrisch in einem drehbeweglich gelagerten Zylinder (7) aufgenommen ist, so dass über eine Drehung des Zylinders (7) die Lage des Bolzens (6) in Bezug auf die Längsachse (10) des Zulaufkanals (5) veränderbar ist.

3. Kraftstoffinjektor (1) nach Anspruch 1,
**dadurch gekennzeichnet, dass** der Bolzen (6) in Bezug auf den Zulaufkanal (5) radial verschiebbar gelagert oder in einem in Bezug auf den Zulaufkanal (5) radial verschiebbaren Körper gehalten ist.

4. Kraftstoffinjektor (1) nach einem der vorhergehenden Ansprüche,
**dadurch gekennzeichnet, dass** zur Rückstellung des Bolzens (6) in eine Ausgangslage, beispielsweise in eine zentrische Lage in Bezug auf die Längsachse (10) des Zulaufkanals (5), mindestens ein Federelement vorgesehen ist.

5. Kraftstoffinjektor (1) nach Anspruch 4,
**dadurch gekennzeichnet, dass** die Federkräfte des mindestens einen Federelements den drehbeweglich gelagerten Zylinder (7) mit einem Drehmoment beaufschlagen.

6. Kraftstoffinjektor (1) nach einem der vorhergehenden Ansprüche,
**dadurch gekennzeichnet, dass** der Zylinder (7) koaxial zur Längsachse (10) des Zulaufkanals (5) angeordnet ist.

7. Kraftstoffinjektor (1) nach einem der vorhergehenden Ansprüche,
**dadurch gekennzeichnet, dass** der Zulaufkanal (5) gestuft ausgeführt ist und einen als Axiallager für den Zylinder (7) dienenden ringförmigen Absatz (8) ausbildet.

8. Kraftstoffinjektor (1) nach einem der vorhergehenden Ansprüche,
**dadurch gekennzeichnet, dass** der Zulauf von hydraulischem Druckmittel in die Zulaufdrossel (4) über einen senkrecht zum Zulaufkanal (5) geführten Verbindungskanal (9) erfolgt, so dass die Zulaufdrossel (4) radial anströmbar ist.

9. Kraftstoffinjektor (1) nach einem der Ansprüche 1 bis 7,
**dadurch gekennzeichnet, dass** der Zulauf von hydraulischem Druckmittel in die Zulaufdrossel (4) über einen parallel zum Zulaufkanal (5) geführten Verbindungskanal (9) erfolgt, so dass die Zulaufdrossel (4) axial anströmbar ist.

10. Verfahren zum Betreiben eines Kraftstoffinjektors (1), der zum Einblasen gasförmiger Kraftstoffe in einen Brennraum einer Brennkraftmaschine mindestens eine hubbewegliche Düsennadel (2) zum Freigeben und Verschließen mindestens einer Einblasöffnung umfasst, wobei zur Steuerung der Hubbewegungen der Düsennadel (2) ein an der Düsennadel (2) anliegender Steuerdruck in einem Steuerraum (3) verändert wird, der über eine Zulaufdrossel (4), die innerhalb eines Zulaufkanals (5) ausgebildet ist, mit einem hydraulischen Druckmittel, vorzugsweise mit flüssigem Kraftstoff, beaufschlagt und über eine Ablaufdrossel entlastet wird,
**dadurch gekennzeichnet, dass** zur betriebspunktabhängigen Steuerung der Einblasrate des Kraftstoffinjektors der Durchfluss durch die Zulaufdrossel (4) variiert wird und zur Variation des Durchflusses ein im Zulaufkanal (5) aufgenommener Bolzen (6) bewegt wird, so dass sich seine Lage in Bezug auf eine Längsachse (10) des Zulaufkanals (5) verändert und dass der Drosselquerschnitt der Zulaufdrossel (4) ring- oder sichelförmig ist.

11. Verfahren nach Anspruch 10,
**dadurch gekennzeichnet, dass** der Bolzen (6) mechanisch entgegen der Federkraft mindestens eines Federelements bewegt wird und die Federkraft zur Rückstellung des Bolzens (6) genutzt wird.

## Claims

1. Fuel injector (1) for injecting gaseous fuels into a combustion chamber of an internal combustion engine, comprising at least one nozzle needle (2) that can be moved in a reciprocating manner to open and close at least one injection opening, wherein the nozzle needle (2) delimits a control chamber (3) which can be charged with a hydraulic pressure medium, preferably with liquid fuel, via an inlet throttle (4) which is formed within an inlet duct (5),
**characterized in that** a pin (6), the position of which in relation to a longitudinal axis (10) of the inlet duct (5) is variable, is accommodated in the inlet duct (5), forming an annular gap serving as an inlet throttle (4), so that the throttle cross section of the inlet throttle (4) is annular or crescent-shaped.

2. Fuel injector (1) according to Claim 1,
**characterized in that** one end of the pin (6) is accommodated eccentrically in a rotatably mounted cylinder (7), so that the position of the pin (6) in relation to the longitudinal axis (10) of the inlet duct (5) can be varied via rotation of the cylinder (7).

3. Fuel injector (1) according to Claim 1,
**characterized in that** the pin (6) is mounted such that it can be displaced radially in relation to the inlet duct (5) or is held in a body that can be displaced radially in relation to the inlet duct (5).

4. Fuel injector (1) according to one of the preceding claims,
**characterized in that** at least one spring element is provided to reset the pin (6) into an initial position, for example into a central position in relation to the longitudinal axis (10) of the inlet duct (5).

5. Fuel injector (1) according to Claim 4,
**characterized in that** the spring forces of the at least one spring element apply a torque to the rotatably mounted cylinder (7).

6. Fuel injector (1) according to one of the preceding claims,
**characterized in that** the cylinder (7) is arranged coaxially with respect to the longitudinal axis (10) of the inlet duct (5).

7. Fuel injector (1) according to one of the preceding claims,
**characterized in that** the inlet duct (5) is stepped and forms an annular shoulder (8) that serves as an axial bearing for the cylinder (7).

8. Fuel injector (1) according to one of the preceding claims,
**characterized in that** hydraulic pressure medium is fed into the inlet throttle (4) via a connecting duct (9) led at right angles to the inlet duct (5), so that radial flow to the inlet throttle (4) is possible.

9. Fuel injector (1) according to one of Claims 1 to 7,
**characterized in that** hydraulic pressure medium is fed into the inlet throttle (4) via a connecting duct (9) led parallel to the inlet duct (5), so that axial flow to the inlet throttle (4) is possible.

10. Method for operating a fuel injector (1) which, to inject gaseous fuels into a combustion chamber of an internal combustion engine, comprises at least one nozzle needle (2) that can be moved in a reciprocating manner to open and close at least one injection opening, wherein, to control the reciprocating movements of the nozzle needle (2), a control pressure applied to the nozzle needle (2) is varied in a control chamber (3) which is charged with a hydraulic pressure medium, preferably with liquid fuel, via an inlet throttle (4) which is formed within an inlet duct (5), and is relieved via an outlet throttle,
**characterized in that** for the operating-point-dependent control of the injection rate of the fuel injector, the flow through the inlet throttle (4) is varied and, to vary the flow, a pin (6) accommodated in the inlet duct (5) is moved, so that its position in relation to a longitudinal axis (10) of the inlet duct (5) is varied and that the throttle cross section of the inlet throttle (4) is annular or crescent-shaped.

11. Method according to Claim 10,
**characterized in that** the pin (6) is moved mechanically against the spring force of at least one spring element, and the spring force is used to reset the pin (6).

## Revendications

1. Injecteur de carburant (1) servant à injecter des carburants gazeux dans une chambre de combustion d'un moteur à combustion interne, comprenant au moins une aiguille d'injecteur (2) effectuant un mouvement de va-et-vient pour libérer et fermer au moins une ouverture d'injection, l'aiguille d'injecteur (2) délimitant une chambre de commande (3) qui peut être soumise à l'action d'un fluide sous pression hydraulique, de préférence d'un carburant liquide, par le biais d'un étranglement d'alimentation (4) qui est formé à l'intérieur d'un canal d'alimentation (5),
**caractérisé en ce qu'**un boulon (6) est reçu dans le canal d'admission (5) en formant un interstice annulaire servant d'étranglement d'admission (4), boulon dont la position par rapport à un axe longitudinal (10) du canal d'admission (5) peut être modifiée, de sorte que la section transversale d'étranglement de l'étranglement d'admission (4) soit en forme d'anneau ou de croissant.

2. Injecteur de carburant (1) selon la revendication 1,
**caractérisé en ce qu'**une extrémité du boulon (6) est reçue de manière excentrique dans un cylindre (7) monté mobile en rotation, de sorte que, par une rotation du cylindre (7), la position du boulon (6) par rapport à l'axe longitudinal (10) du canal d'admission (5) puisse être modifiée.

3. Injecteur de carburant (1) selon la revendication 1,
**caractérisé en ce que** le boulon (6) est monté déplaçable radialement par rapport au canal d'admission (5) ou est retenu dans un corps déplaçable radialement par rapport au canal d'admission (5).

4. Injecteur de carburant (1) selon l'une des revendications précédentes,
**caractérisé en ce qu'**au moins un élément ressort est prévu pour le rappel du boulon (6) dans une position initiale, par exemple dans une position centrée par rapport à l'axe longitudinal (10) du canal d'admission (5) .

5. Injecteur de carburant (1) selon la revendication 4,
**caractérisé en ce que** les forces de ressort de l'au moins un élément ressort soumettent le cylindre (7) monté mobile en rotation à un couple.

6. Injecteur de carburant (1) selon l'une des revendications précédentes,
**caractérisé en ce que** le cylindre (7) est disposé de manière coaxiale par rapport à l'axe longitudinal (10) du canal d'admission (5).

7. Injecteur de carburant (1) selon l'une des revendications précédentes,
**caractérisé en ce que** le canal d'admission (5) est réalisé de manière étagée et forme un épaulement (8) en forme d'anneau servant de palier axial pour le cylindre (7) .

8. Injecteur de carburant (1) selon l'une des revendications précédentes,
**caractérisé en ce que** l'admission de fluide sous pression hydraulique dans l'étranglement d'admission (4) s'effectue via un canal de liaison (9) guidé perpendiculairement au canal d'admission (5), de sorte que l'étranglement d'admission (4) puisse être traversé par un flux radial.

9. Injecteur de carburant (1) selon l'une des revendications 1 à 7,
**caractérisé en ce que** l'admission de fluide sous pression hydraulique dans l'étranglement d'admission (4) s'effectue via un canal de liaison (9) guidé parallèlement au canal d'admission (5), de sorte que l'étranglement d'admission (4) puisse être traversé par un flux axial.

10. Procédé pour faire fonctionner un injecteur de carburant (1), qui comprend, pour injecter des carburants gazeux dans une chambre de combustion d'un moteur à combustion interne, au moins une aiguille d'injecteur (2) effectuant un mouvement de va-et-vient pour libérer et fermer au moins une ouverture d'injection, une pression de commande appliquée à l'aiguille d'injecteur (2) étant modifiée dans une chambre de commande (3) pour la commande des mouvements de va-et-vient de l'aiguille d'injecteur (2), laquelle chambre de commande est soumise à l'action d'un fluide sous pression hydraulique, de préférence d'un carburant liquide, par le biais d'un étranglement d'alimentation (4) qui est formé à l'intérieur d'un canal d'alimentation (5) et est déchargée par le biais d'un étranglement de sortie,
**caractérisé en ce que**, pour la commande, en fonction du point de fonctionnement, des taux d'injection de l'injecteur de carburant, le débit à travers l'étranglement d'admission (4) est modifié et, pour la modification du débit, un boulon (6) reçu dans le canal d'admission (5) est déplacé, de sorte que sa position par rapport à un axe longitudinal (10) du canal d'admission (5) soit modifiée et que la section transversale d'étranglement de l'étranglement d'admission (4) soit en forme d'anneau ou de croissant.

11. Procédé selon la revendication 10,
**caractérisé en ce que** le boulon (6) est déplacé mécaniquement à l'encontre de la force de ressort d'au moins un élément ressort et la force de ressort est utilisée pour le rappel du boulon (6).
